(19) Europäisches Patentamt
European Patent Office
Office européen des brevets

(11) EP 3 468 424 B1

(12) **EUROPEAN PATENT SPECIFICATION**

(45) Date of publication and mention of the grant of the patent:
**29.09.2021 Bulletin 2021/39**

(21) Application number: **17810819.7**

(22) Date of filing: **06.06.2017**

(51) Int Cl.:
***D04H 1/4334** (2012.01)* ***D04H 1/56** (2006.01)*
***D04H 3/16** (2006.01)* ***D04H 3/009** (2012.01)*

(86) International application number:
**PCT/US2017/036062**

(87) International publication number:
**WO 2017/214085 (14.12.2017 Gazette 2017/50)**

(54) **SOLUTION-SPUN POLYAMIDE NANOFIBER NONWOVENS**

LÖSUNGSGESPONNENE POLYAMIDNANOFASERVLIESSTOFFE

NON TISSÉS EN NANOFIBRES DE POLYAMIDE FILÉES EN SOLUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2016 US 201662348524 P**
**10.06.2016 US 201662348462 P**

(43) Date of publication of application:
**17.04.2019 Bulletin 2019/16**

(73) Proprietor: **Ascend Performance Materials Operations LLC**
**Houston, TX 77002 (US)**

(72) Inventors:
- **SCHOOTS, Harrie P.**
  **League City, TX 77573 (US)**
- **YUNG, Wai-Shing**
  **Pensacola, FL 32526 (US)**
- **OSBORN, Scott E.**
  **Pensacola, FL 32534 (US)**
- **TRASK, Craig A.**
  **Florence, SC 29501 (US)**

(74) Representative: **Ackermann, Joachim**
**Antoniterstraße 9**
**65929 Frankfurt am Main (DE)**

(56) References cited:
**WO-A1-03/080905**
**WO-A1-2008/057418**
**WO-A1-2015/053444**
**WO-A1-2015/073814**
**WO-A2-2008/036332**
**WO-A2-2015/003170**
**US-A- 5 558 826**
**US-A1- 2009 026 137**
**US-A1- 2014 199 468**

- **DATABASE WPI Week 201662 Thomson Scientific, London, GB; AN 2016-37403Y XP002796602, & CN 105 597 428 A (LVNA TECHNOLOGY CO LTD) 25 May 2016 (2016-05-25)**
- **STEPHENS, J. S. ET AL: "Effect of the Electrospinning Process on Polymer Crystallization Chain Conformation in Nylon-6 and Nylon-12", MACROMOLECULES, vol. 37, no. 3, 16 January 2004 (2004-01-16), pages 877-881,**
- **ZHIMING Z.; JUN, S.: "Research on the development of the centrifugal spinning", MATEC WEB OF CONFERENCES 95, 2017, DOI: 10.1051/matecconf/2017950700**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 468 424 B1

## Description

### TECHNICAL FIELD

The present invention relates to polyamide nanofiber nonwovens useful for air filtration, breathable fabrics for apparel and packaging, as well as other applications.

### BACKGROUND

Polymer membranes, including nanofiber and microfiber nonwovens are known in the art and are used for a variety of purposes, including in connection with filtration media and apparel. Known techniques for forming finely porous polymer structures include xerogel and aerogel membrane formation, electrospinning, melt-blowing, as well as centrifugal-spinning with a rotating spinneret and two-phase polymer extrusion through a thin channel using a propellant gas.

United States Patent Application Publication No. US 2014/0097558 A1, of Lustenberger, entitled "Nanofiber Filtering Material for Disposable/Reusable Respirators" relates generally to methods of manufacture of a filtration media, such as a personal protection equipment mask or respirator, which incorporates an electrospinning process to form nanofibers onto a convex mold, which may, for example, be in the shape of a human face. See, also, United States Patent Application Publication No. US 2015/0145175 A1, of *Lustenberger,* also entitled "Nanofiber Filtering Material for Disposable/Reusable Respirators".

WO 2014/074818 A2, of Emergent Sensor Technologies, discloses nanofibrous meshes and xerogels used for selectively filtering target compounds or elements from a liquid. Also described are methods for forming nanofibrous meshes and xerogels, methods for treating a liquid using nanofibrous meshes and xerogels, and methods for analyzing a target compound or element using nanofibrous meshes and xerogels.

WO 2015/003170 A2, of The North Face Apparel Corp., relates to nonwoven textiles consisting of webs of superfine fibers, i.e., fibers with diameters in nanoscale or micronscale ranges, for use in articles that have, for example a predetermined degree of waterproofness with breathability, or windproofness with breathability.

WO 2015/153477 A1, also of North Face Apparel Corp., relates to a fiber construct suitable for use as a fill material for insulation or padding, comprising: a primary fiber structure comprising a predetermined length of fiber; a secondary fiber structure, the secondary fiber structure comprising a plurality of relatively short loops spaced along a length of the primary fiber. Among the techniques enumerated for forming the fiber structures include electrospinning, melt-blowing, melt-spinning and centrifugal-spinning. See page 18, lines 8-12. The products are reported to mimic goose-down, with fill power in the range of 550 to 900; page 40, lines 9-13.

US 7008465 of Donaldson Company Inc. relates to cleanable high efficiency filter media structure and applications for use. Disclosed is a filter structure and system having a nanofiber layer comprising a polymeric material having a basis weight of about $3\times10^{-7}$ to $6\times10^{-5}$ gm/cm$^2$.

WO 2008/036332 A2 discloses improved nanowebs. These are manufactured by an electroblowing process.

US 2009/026137 A1 discloses liquid filtration media wherein the liquid filter has a composite medium that has a nanoweb adjacent to and optionally bonded to a microporous membrane. The nanowebs are formed by an electroblowing process.

Despite the variety of techniques and materials proposed, conventional products have much to be desired in terms of manufacturing costs, processability and product properties.

### SUMMARY OF INVENTION

Disclosed herein is a nanofiber nonwoven product as claimed in claim 1 and a method of making a nanofiber nonwoven product as claimed in claim 12.

The method includes:

providing a spinnable polyamide polymer composition comprising a solution of a polyamide in a suitable solvent, wherein the polyamide has a Relative Viscosity of from 30-300; centrifugally solution-spinning at a spinneret rotational speed of at least 5000 rpm the polyamide polymer composition into a plurality of nanofibers having an average fiber diameter of less than 1000 nanometers; forming the nanofibers into a nonwoven product which thereby has an average nanofiber diameter of less than 1000 nanometers, and the nonwoven product as a basis weight greater than 1 gm/m$^2$. The nonwoven product is solution-spun from a centrifugal spinning process using a rotating spinneret. Suitable solvents include formic acid, sulfuric acid, trifluoroacetic acid, hexafluoroisopropanol (HFIP) and phenols including m-cresol.

Particularly preferred polyamides include:

Nylon 6,6

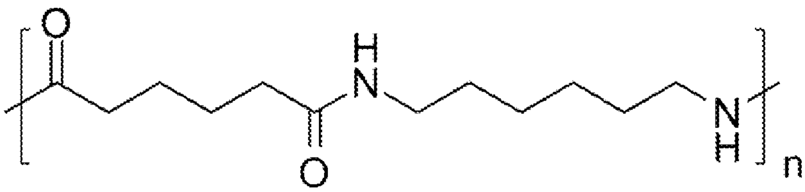

As well as copolymers, blends and alloys of Nylon 6,6 with

Nylon 6

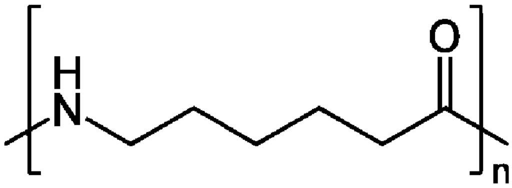

Other embodiments include nylon derivatives, copolymers, blends and alloys containing or prepared from Nylon 6,6 or Nylon 6 or copolymers with the repeat units noted above including but not limited to: N6T/66, N612, N6/66, N11, and N12, wherein "N" means Nylon. Herein, the "N" is interchangeably used with or without the numbering. Those of skill in the art will recognize the nylon meaning. Another preferred embodiment includes High Temperature Nylons as well as blends, derivatives or copolymers containing them. Furthermore, another preferred embodiment includes long chain aliphatic polyamides made with long chain diacids, as well as blends, derivatives, or copolymers containing them.

Preferred ranges for Relative Viscosities for the polyamide include: 35-300, 40-255, 35-100, 35-55, and 40-52.5. Basis weights include greater than 1 gm/m$^2$.

The invention is appreciated by reference to **Figures 1A, 1B, 2A, 2B** which show nanofiber nonwovens of the invention. **Figure 1A** shows the nanofiber nonwoven of Examples 3 and 4 at low magnification, while **Figure 1B** shows the same product at higher magnification. The product of **Figures 1A, 1B** were made with a nylon polyamide having a Relative Viscosity of 51 and has an average nanofiber diameter of 288 nanometers. **Figures 2A** and **2B** are similar photomicrographs of the products of Examples 1 and 2 made with material having a Relative Viscosity of 42 and has an average fiber diameter of 302 nanometers.

The products exhibit surprising filtration efficiency. Despite the relatively dense macrostructure, the Air Permeability Values of the products are especially surprising in that the products remain permeable to air. The products of the invention are thus uniquely suited for application in filtration, apparel and packaging, as hereinafter described in more detail where these properties play an important role.

## BRIEF DESCRIPTION OF DRAWINGS

The invention is described in detail below with reference to the drawings wherein like numerals designate similar parts and wherein:

**Figure 1A** is a photomicrograph of a nanofiber nonwoven product made with Nylon 6,6 of a Relative Viscosity of 51 at a magnification of 570X;

**Figure 1B** is a photomicrograph of the product of **Figure 1A** at a magnification of 20,500X;

**Figure 2A** is a photomicrograph of a nanofiber nonwoven product made with Nylon 6,6 of a Relative Viscosity of 42 at a magnification of 560X;

**Figure 2B** is a photomicrograph of the product of **Figure 2A** at a magnification of 22,000X;

**Figure 3** is a schematic perspective view of a centrifugal-spinning apparatus and fiber distribution system;

**Figure 4** is a schematic diagram of portions of the apparatus of **Figure 3;**

**Figure 5** is a schematic diagram of a 2-phase propellant-gas spinning system useful in connection with the present invention;

**Figure 6** details Example 1 results, in particular, **Figure 6A** is a plot of fiber diameter versus count; **Figure 6B** is a histogram showing filtration efficiency; **Figure 6C** is a histogram showing pressure drop seen with filtration efficiency testing; and **Figure 6D** is a plot of Air permeability;

**Figure 7** details Example 2 results, in particular, **Figure 7A** is a plot of fiber diameter versus count; **Figure 7B** is a histogram showing filtration efficiency; **Figure 7C** is a histogram showing pressure drop seen with filtration efficiency testing; and **Figure 7D** is a plot of Air permeability;

**Figure 8** details Example 3 results, in particular, **Figure 8A** is a plot of fiber diameter versus count; **Figure 8B** is a histogram showing filtration efficiency; **Figure 8C** is a histogram showing pressure drop seen with filtration efficiency testing; and **Figure 8D** is a plot of Air permeability; and

**Figure 9** details Example 4 results, in particular, **Figure 9A** is a plot of fiber diameter versus count; **Figure 9B** is a histogram showing filtration efficiency; **Figure 9C** is a histogram showing pressure drop seen with filtration efficiency testing; and **Figure 9D** is a plot of Air permeability.

## DETAILED DESCRIPTION

The invention is described in detail below in connection with the **Figures** for purposes of illustration, only. The invention is defined in the appended claims. Terminology used herein is given its ordinary meaning consistent with the definitions set forth below; GSM refers to basis weight in grams per square meter, RV refers to Relative Viscosity and so forth.

Percents, parts per million (ppm) and the like refer to weight percent or parts by weight based on the weight of the composition unless otherwise indicated.

Typical definitions and test methods are further recited in US 2015/0107457, and US 2015/0111019. The term "nanofiber nonwoven product" for example, refers to a web of a multitude of essentially randomly oriented fibers where no overall repeating structure can be discerned by the naked eye in the arrangement of fibers. The fibers can be bonded to each other, or can be unbounded and entangled to impart strength and integrity to the web. The fibers can be staple fibers or continuous fibers, and can comprise a single material or a multitude of materials, either as a combination of different fibers or as a combination of similar fibers each comprising of different materials. The nanofiber nonwoven product is constructed predominantly of nanofibers. "Predominantly" means that greater than 50% of the fibers in the web are nanofibers. The term "nanofiber" refers to fibers having a number average diameter less than 1000 nm. In the case of non-round cross-sectional nanofibers, the term "diameter" as used herein refers to the greatest cross-sectional dimension.

Basis Weight may be determined by ASTM D-3776 and reported in $g/m^2$.

"Consisting essentially of" and like terminology refers to the recited components and excludes other ingredients which would substantially change the basic and novel characteristics of the composition or article. Unless otherwise indicated or readily apparent, a composition or article consists essentially of the recited or listed components when the composition or article includes 90% or more by weight of the recited or listed components. That is, the terminology excludes more than 10% unrecited components.

To the extent not indicated otherwise, test methods for determining average fiber diameters, and, filtration efficiency are as indicated in Hassan et al., J Membrane Sci., 427, 336-344, 2013, unless otherwise specified.

Air permeability is measured using an Air Permeability Tester, available from Precision Instrument Company, Hagerstown, MD. Air permeability is defined as the flow rate of air at 23 $\pm$ 1°C through a sheet of material under a specified pressure head. It is usually expressed as cubic feet per minute (0.028 $m^3$/min) per square foot (0.093 $m^2$) at 0.50 in. (12.7 mm) water pressure, in $cm^3$ per second per square cm or in units of elapsed time for a given volume per unit area of sheet. The instrument referred to above is capable of measuring permeability from 0 to approximately 5000 cubic feet per minute (0 to 141.7 $m^3$/min) per square foot (0.093 $m^2$) of test area. For purposes of comparing permeability, it is convenient to express Air Permeability values normalized to 5 GSM basis weight. This is done by measuring Air Permeability Value and basis weight of a sample (@ 0.5" (1.27 cm) $H_2O$ typically), then multiplying the actual Air Permeability Value by the ratio of actual basis weight in GSM to 5. For example, if a sample of 15 GSM basis weight has a Value of 3.05 $m^3/min*m^2$) (10 $CFM/ft^2$), its Normalized 5 GSM Air Permeability Value is 9.15 $m^3/min*m^2$) (30 $CFM/ft^2$).

As used herein, polyamide composition and like terminology refers to compositions containing polyamides

including copolymers, polymer blends, alloys and derivatives. A suitable alloy may include for example, 20% Nylon 6, 60% Nylon 6,6 and 20% by weight of a polyester. In cases where alloys are used, it may be necessary to use a carefully selected solvent or blend of solvents to optimize results. In cases where the polyamide composition consists essentially of polyamides, preferred solvents include a solvent selected from: formic acid, sulfuric acid, trifluoroacetic acid, hexafluoroisopropanol (HFIP) and phenols including m-cresol.

Exemplary polyamides and polyamide compositions are described in Kirk-Othmer, Encyclopedia of Chemical Technology, Vol. 18, pp. 328-371 (Wiley 1982), the disclosure of which is incorporated by reference.

Briefly, polyamides are products that contain recurring amide groups as integral parts of the main polymer chains. Linear polyamides are of particular interest and may be formed from condensation of bifunctional monomers as is well known in the art. Polyamides are frequently referred to as nylons. Although they generally are considered as condensation polymers, polyamides also are formed by addition polymerization. This method of preparation is especially important for some polymers in which the monomers are cyclic lactams (i.e. Nylon 6). Particular polymers and copolymers and their preparation are seen in the following patents: United States Patent No. 4,760,129, entitled "Process for Preparing Highly Viscous Polyhexamethyleneadipamide", to *Haering et al.;* United States Patent No. 5,504,185, entitled "Process for Production of Polyamides, Polyamides Produced by Said Process and Polyamide Film or Sheet", to *Toki et al.;* United States Patent No. 5,543,495, entitled "Process for Increasing the Molecular Weight of Polyamides and Other Condensation Polymers", to *Anolick et al.;* United States Patent No. 5,698,658, entitled "Linear Very High Molecular Weight Polyamides and Process for Producing Them", to *Dujari et al.;* United States Patent No. 6,011,134, entitled "Method for Manufacturing Poly(Hexamethylene Adipamide) from Monomethyladipate and Hexamethylenediamine", to *Marks et al.;* United States Patent No. 6,136,947, entitled "Process and Device for the Standardized Continuous Production of Polyamides", to *Wiltzer et al.;* United States Patent No. 6,169,162, entitled "Continuous Polyamidation Process", to *Bush et al.;* "Polyamide Chain Extension Process and Related Polyamide Product", to *Zahr,* United States Patent No. 7,138,482, entitled "Production Method of Polyamide", to *Tanaka et al.;* United States Patent No. 7,381,788, entitled "Method for Continuous Production of Polyamide", to *Tsujii et al.;* and United States Patent No. 8,759,475, entitled "Continuous Production of Polyamides", to *Thierry et al.*

A class of polyamides particularly preferred for some applications includes High Temperature Nylons (HTN's) as are described in Glasscock et al., High Performance Polyamides Fulfill Demanding Requirements for Automotive Thermal Management Components, (Dupont), http://www2.dupont.com/Automotive/en_US/assets/downloads/knowledge%20c enter/HTN-whitepaper-R8.pdf available online June 10. 2016. Such polymers typically include one or more of the structures seen In the following and shown as representative:

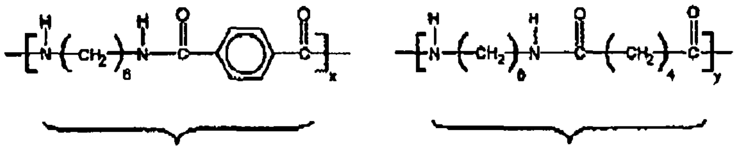

6T Segment    66 Segment

6T/66

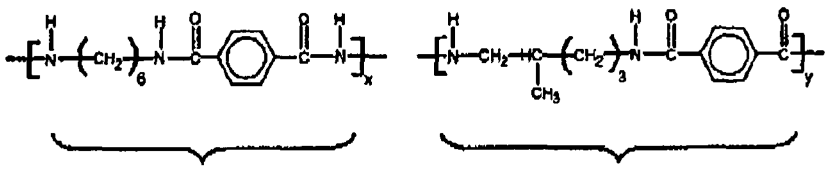

6T Segment    DT Segment

6T/DT

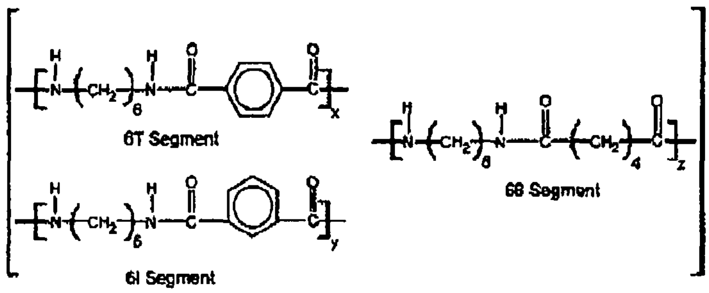

6T/6I/66

Relative viscosity (RV) of polyamides refers to the ratio of solution or solvent viscosities measured in a capillary viscometer at 25°C. (ASTM D 789). For present purposes the solvent is formic acid containing 10% by weight water and 90% by weight formic acid. The solution is 8.4% by weight polymer dissolved in the solvent.

The relative viscosity, ($\eta_r$), is the ratio of the absolute viscosity of the polymer solution to that of the formic acid:

$$\eta_r = (\eta_p/\eta_f) = (f_r \times d_p \times t_p)/\ \eta_f$$

where: $d_p$ = density of formic acid-polymer solution at 25°C,
$t_p$ = average efflux time for formic acid-polymer solution, s
$\eta_f$ = absolute viscosity of formic acid, kPa × s(E+6cP)
$f_r$ = viscometer tube factor, $mm^2/s$ (cSt)/s = $\eta_r / t_3$

A typical calculation for a 50 RV specimen is as follows:

$$\eta_r = (f_r \times d_p \times t_p)/\ \eta_f$$

Where

$f_r$ = viscometer tube factor, typically 0.485675 cSt/s
$d_p$ = density of the polymer -formic solution, typically 1.1900 g/ml
$t_p$ = average efflux time for polymer - formic solution, typically 135.00 s
$\eta_f$ = absolute viscosity of formic acid, typically 1.56 cP
giving an RV of
$\eta_r$ = (0.485675 cSt/s × 1.1900 g/ml × 135.00 s)/ 1.56 cP = 50.0

The term $t_3$ is the efflux time of the S-3 calibration oil used in the determination of the absolute viscosity of the formic acid as required in ASTM D789.

Centrifugal-spinning refers to a process for making polymer fibers by spinning through a rotating spinneret as is noted in WO 2015/153477 (North Face Apparel Corp). Centrifugal-spinning is the method of making the inventive nanofiber nonwovens of the invention.

A centrifugal-spinning system typically includes a spinneret that is coupled to a source of fluid or flowable material that is formable into a fiber. The source of material may be from a supply source, such as a reservoir or hopper for continuously feeding the spinneret. The spinneret could itself include a reservoir or hopper of material that is rotated with the spinneret if so desired. The flowable material is a solution of material. The spinneret is mechanically coupled to a motor that rotates the spinneret in a circular motion. The rotation during which material is ejected is at least 5,000 RPM when making nanofibers.

During rotation, a selected material, for example, a polymer solution, is ejected as a stream of material from one or more outlet ports on the spinneret into the surrounding atmosphere. The outward radial centrifugal force stretches the polymer stream as it is projected away from the outlet port, and the stream travels in a curled trajectory due to rotation-dependent inertia. Stretching of the extruded polymer stream is believed to be important in reducing stream diameter over the distance from the nozzle to a collector as well as providing tortuosity to the products. The ejected material is solidifies into a superfine fiber by the time it reaches a collector. The collecting surface could be static or movable, for example, the fiber may be directed onto a continuous belt if so desired.

One preferred system is depicted schematically in Figures 35 and 36 appearing in United States Patent No. 8,777,599 to Peno et al. As is seen therein, and described briefly in connection with the attached **Figures 3** and **4** of the present invention.

A top driven fiber producing system is particularly useful for depositing fibers onto a substrate. A configuration for depositing fibers onto a substrate is shown in **Figure 3**. Substrate deposition system **10** includes a deposition system **12** and a substrate transfer system **14**. Deposition system **12** includes a fiber producing system **16**. The deposition system produces and directs fibers produced by a fiber producing device toward a substrate **18** disposed below the fiber producing device during use. Substrate transfer system moves a continuous sheet of substrate material through the deposition system.

Deposition system **12** includes a top mounted fiber producing device including a rotating spinneret indicated at **16**. During use, fibers produced by fiber producing device **16** are deposited onto substrate **18**.

A schematic diagram of deposition system **12** is depicted in **Figure 4**. The fiber deposition system may include one or more of: a vacuum system **20**, an electrostatic plate **22**, and a gas flow system **24**. A vacuum system produces a region of reduced pressure under substrate **18** such that fibers produced by fiber producing device **16** are drawn toward the substrate due to the reduced pressure. Alternatively, one or more fans may be positioned under the substrate to create an air flow through the substrate. Gas flow system **24** produces a gas flow **25** that directs fibers formed by the fiber producing device toward the substrate. The gas flow system may be a pressurized air source or one or more fans that produce a flow of air (or other gas). The combination of vacuum and air flow systems are used to produce a "balanced air flow" from the top of the deposition chamber through the substrate to the exhaust system by using forced air (fans, pressurized air) and exhaust air (fans, to create an outward flow) and balancing and directing the airflow to produce a fiber deposition field down to the substrate. Deposition system **12** includes substrate inlet **26** and substrate outlet **28**.

Electrostatic plate **22** is also positioned below substrate **18**. The electrostatic plate is a plate capable of being charged to a predetermined polarity. Typically, fibers produced by the fiber producing device have a net charge. The net charge of the fibers may be positive or negative, depending on the type of material used. To improve deposition of charged fibers, an electrostatic plate may be disposed below substrate **18** and be charged to an opposite polarity as the produced fibers. In this manner, the fibers are attracted to the electrostatic plate due to the electrostatic attraction between the opposite charges. The fibers become embedded in the substrate as the fibers move toward the electrostatic plate.

A pressurized gas producing and distribution system may be used to control the flow of fibers toward a substrate disposed below the fiber producing device. During use fibers produced by the fiber producing device are dispersed within the deposition system. Since the fibers are composed primarily of microfibers and/or nanofibers, the fibers tend to disperse within the deposition system. The use of a pressurized gas producing and distribution system may help guide the fibers toward the substrate. The pressurized gas producing and distribution system includes downward gas flow device **24** and a lateral gas flow device 30. Downward gas flow device **24** is positioned above or even with the fiber producing device to facilitate even fiber movement toward the substrate. One or more lateral gas flow devices **30** are oriented perpendicular to or below the fiber producing device. If desired, lateral gas flow devices **30** have an outlet width equal to the substrate width to facilitate even fiber deposition onto substrate. The angle of the outlet of one or more lateral gas flow devices **30** may be varied to allow better control of the fiber deposition onto the substrate. Each lateral gas flow devices **30** may be independently operated.

During use of the deposition system, fiber producing device **16** may produce various gasses due to evaporation of solvents (during solution spinning) and material gasification (during melt spinning). Such gasses, if accumulated in the deposition system may begin to effect the quality of the fiber produced. Optionally, the deposition system includes an outlet fan **32** to remove gasses produced during fiber production from the deposition system.

Substrate transfer system **14** is capable of moving a continuous sheet of substrate material through the deposition system. Substrate transfer system **14** may include a substrate reel **34** and a take up reel system **36**. During use, a roll of substrate material is placed on substrate reel **34** and threaded through deposition system **12** to the substrate take up reel system **36**. During use, substrate take up reel system **36** rotates, pulling substrate through deposition system at a predetermined rate. In this manner, a continuous roll of a substrate material may be pulled through the fiber deposition system and the basis weight of a nanofiber nonwoven deposited on the substrate controlled by controlling the speed of the collecting substrate.

Further discussion and illustration of centrifugal-spinning processes are seen in United States Patent No. 8,658,067 to Peno et al., entitled "Apparatuses and Methods for the Deposition of Microfibers and nanofibers on a Substrate", as well as: WO 2012/109251, and equivalent systems seen in United States Patent No. 8,747,723 to Marshall et al., entitled "Solution Spun Fiber Process' and United States Patent No. 8,277,711 to Huang et al., entitled "Production of Nanofibers by Melt Spinning".

A 2-phase spinning process (not invention) is shown in **Figure 5.**

**Figure 5** illustrates schematically operation of a system for spinning a nanofiber nonwoven including a polymer feed assembly **110,** an air feed **120**, a spinning cylinder **130**, a collector belt **140** and a take up reel **150**. During operation, polymer melt or solution is fed to spinning cylinder **130** where it flows through a thin channel in the cylinder with high

pressure air, shearing the polymer into nanofibers. Details are provided in the aforementioned United States Patent No. 8,668,854. The throughput rate and basis weight is controlled by the speed of the belt. Optionally, functional additives such as charcoals, copper or the like can be added with the air feed, if so desired.

In an alternate construction of the spinneret used in the system of **Figure 5,** particulate material may be added with a separate inlet as is seen in United States Patent No. 8,808,594 to Marshall et al., entitled "Coform Fibrous Materials and Method for Making Same".

Polyamide resins of the present invention have an RV of from 30-300 with preferred ranges disclosed above. Basis weight is greater than 1 gm/m$^2$.

## Materials, Spinning and Nonwoven Formation Examples

Utilizing the procedures and apparatus of the class discussed above in connection with **Figures 3** and **4,** two different grades of Nylon 6,6 were spun into a nonwoven by centrifugal-spinning onto a moving collector belt. One resin had a Relative Viscosity of 42 and included a copper halide additive present in 60ppm. A second resin had a Relative Viscosity of 51. The finished nonwovens were disposed on a 0.051 kg/m$^2$ (1.5 ounce per square yard (OSY)) nonwoven polypropylene substrate and analyzed for: basis weight (ASTM D-3776); average fiber diameter by SEM; filtration efficiency and pressure drop using a TSI-8130 and a polyalphaolefin nanoparticle composition @ 300 nm and a test flow rate of 32 l/min; and Air Permeability at 0.5" (1.27 cm) $H_2O$ pressure drop. These latter tests were also performed on the polypropylene substrate. Results are discussed further in the following Examples.

### Examples 1-4

In Examples 1-4, polymer solutions of 24 wt % of Nylon 6,6 in formic acid were centrifugally-spun into nanofiber nonwovens using a spinneret rotational speed of 7500 rpm, a feed rate of 12 ml/min and a head of 6.5 cm. The nonwovens were characterized for average fiber diameter, basis weight, air permeability, filtration efficiency, and pressure drop in accordance with the Hassan et al. article noted above, J Membrane Sci., 427, 336-344, 2013.

For purposes of measuring filtration efficiency, a TSI filter tester was used with a standard 3.5 micron particle size.

Results and details appear in Table 1 and the nonwovens produced are shown in the photomicrographs of **Figures 1** and **2**. The nonwovens had an average fiber diameter in the range of 300 nanometers.

Table 1: Polyamide Nanofiber Nonwoven Product Properties

| Resin RV | Fiber diameter, nm | Example | Basis weight, GSM | Air permeability, m$^3$/(min*m$^2$) (CFM/ft$^2$) | Filtration efficiency, % | Pressure drop, mm H2O |
|---|---|---|---|---|---|---|
| 42 | 302 | 1 | 6.12 | 2.97 (9.73) | 99.833 | 18.2 |
| | | 2 | 7.32 | 2.29 (7.52) | 99.968 | 21.1 |
| 51 | 288 | 3 | 5.82 | 2.65 (8.71) | 99.957 | 20.1 |
| | | 4 | 7.68 | 1.89 (6.21) | 99.996 | 28.5 |

Results are further detailed in **Figures 6** through **9**.

It is appreciated from Table 1 that the nanofiber nonwovens of the invention had a remarkable filtration efficiency, more than 99.95% which is surprising, especially in view of the relatively open structure seen in **Figures 1** and **2.** Without intending to be bound by any theory, it is believed the very fine, relatively uniform morphology of the products provides a tortuous barrier on a nanoscale that resists penetration and provides permeation barrier even at relatively high void volume in the nonwoven.

The Normalized 5 GSM Air Permeability Values for Examples 1-4 are listed in Table 1A.

Table 1A: Normalized 5 GSM Air Permeability Values

| Example | m$^3$/(min*m$^2$) (CFM/ft$^2$) |
|---|---|
| 1 | 3.63 (11.9) |
| 2 | 3.36 (11.0) |
| 3 | 3.08 (10.1) |
| 4 | 2.90 (9.5) |

## Comparative Examples A-G

Utilizing the procedures and apparatus of the class discussed in connection with **Figures 3** and **4** and the characterization procedures described above, the two different grades of Nylon 6,6 used in Examples 1-4 were centrifugally-spun from a polymer melt into microfiber nonwovens using a spinneret rotational speed of 4,000 rpm. The microfiber nonwovens were characterized for average fiber diameter, basis weight, air filtration efficiency and pressure drop.

Table 2: Polyamide Microfiber Nonwoven Product Properties

| Resin RV | Examples | Fiber diameter, micron | Basis weight, GSM | Filtration efficiency, % | Pressure drop, mm H2O | Air permeability, $m^3/(min*m^2)$ ($CFM/ft^2$) |
|---|---|---|---|---|---|---|
| 51 | A | 2.24 | 17.56 | 12.3 | 0.8 | 41.6 (136.4) |
| | B | 2.67 | 13.6 | 40 | | 47.5 (156) |
| 42 | C | 2.76 | 17.38 | 9.3 | 0.8 | 52.6 (172.6) |
| | D | 2.95 | 24.53 | 40.5 | 1.2 | 36.0 (118.1) |
| | E | 2.98 | 38.21 | 38.7 | 1.1 | 38.7 (127) |
| | F | 4.4 | 41 | 42.3 | 1.3 | 34.9 (114.5) |
| | G | 2.08 | 24.5 | 38.2 | 1.1 | 39.0 (127.8) |

Results are further detailed in **Figures 10** through **16**.

It is appreciated from Table 2 that the microfiber nonwoven produced had filtration efficiencies, permeability, and pressure drops vastly inferior to the nanofiber nonwovens of the invention, despite having significantly higher basis weights.

The Normalized 5 GSM Air Permeability Values for Examples A-G are listed in Table 2B.

Table 2B: Normalized 5 GSM Air Permeability Values

| Example | Normalized 5 GSM Air Permeability Value $m^3/(min*m^2)$ ($CFM/ft^2$) |
|---|---|
| A | 146 (479) |
| B | 129 (424) |
| C | 183 (599) |
| D | 177 (579) |
| E | 296 (970) |
| F | 286 (939) |
| G | 191 (626) |

## Comparative Examples H-J

Utilizing the procedures and apparatus of the class discussed in connection with **Figures 3** and **4** and the characterization procedures described above, different grades of Nylon 6,6 were centrifugally-spun from a polymer solution into nanofiber nonwovens using a spinneret rotational speed of 4,000 rpm. The nanofiber nonwovens were characterized for average fiber diameter, basis weight, air filtration efficiency and pressure drop.

Table 3: Polyamide Microfiber Nonwoven Product Properties

| Resin RV | Fiber diameter, nm | Example | Basis weight, GSM | Air permeability, $m^3/(min*m^2)$ (CFM/ft2) | Filtration efficiency, % | Pressure drop mm H2O | concentration in formic acid wt % |
|---|---|---|---|---|---|---|---|
| 51 | 257 | H | 4.60 | 2.07 (6.78) | 99.951 | 24.7 | 22 |

(continued)

| Resin RV | Fiber diameter, nm | Example | Basis weight, GSM | Air permeability, $m^3/(min*m^2)$ (CFM/ft2) | Filtration efficiency, % | Pressure drop mm H2O | concentration in formic acid wt % |
|---|---|---|---|---|---|---|---|
| 40.5 | 233 | I | 4.86 | 1.90 (6.22) | 99.988 | 31.3 | 22 |
| 255 | 253 | J | 3.49 | 2.17 (7.1) | 99.833 | 24.0 | 12 |

It can be appreciated from Table 3 that, even with higher polymer relative viscosity, fibers and nonwovens with similar properties can be made.

Applications

The inventive nanofiber nonwovens are useful in a variety of applications due to their high temperature resistance, barrier and permeability properties, processability and surprising filtration efficiencies. The products may be used in multilayer structures including laminates in many cases.

Thus, the products are used in air filtration in the following sectors: transportation; industrial; commercial and residential.

The products are likewise suitable for barrier applications in breathable fabrics, surgical nonwovens, baby care, adult care, apparel, construction and acoustics. The compositions are useful for sound dampening in automotive, electronic and aircraft applications which may require composites of different fiber sizes for best performance. At higher basis weights, the products are used in connection with beverages, food packaging, transportation, chemical processing and medical applications such as wound dressings or medical implants.

The unique characteristics of the nonwovens of the invention provide functionality and benefits not seen in conventional products, for example, the nonwovens of the invention can be used as packaging for smoked meats. The filtration efficiency filters out unwanted particles and keeps carcinogens away from the meat during the smoking process to provide a healthier consumable end-product.

While the invention has been described in detail, modifications within the scope of the invention will be readily apparent to those of skill in the art. Such modifications are also to be considered as part of the present invention. In addition, it should be understood from the foregoing discussion that aspects of the invention and portions of various embodiments may be combined or interchanged either in whole or in part. Furthermore, those of ordinary skill in the art will appreciate that the foregoing description is by way of example only, and is not intended to limit the invention.

## Claims

1. A nanofiber nonwoven product comprising a polyamide with a Relative Viscosity of from 30-300 determined in accordance with method ASTM D789 using a solution of 8.4 % by weight of the polyamide in a solvent comprising 10 % by weight of water and 90 % by weight of formic acid which polyamide is centrifugally solution-spun into nanofibers at a spinneret rotational speed of at least 5000 rpm and is converted into a nonwoven product with an average nanofiber diameter of less than 1000 nanometers, and a basis weight greater than 1 $gm/m^2$.

2. The nanofiber nonwoven product according to claim 1, wherein said polyamide is Nylon 6,6.

3. The nanofiber nonwoven product according to claim 1, wherein said polyamide is a copolymer, blend or alloy of Nylon 6,6 and Nylon 6.

4. The nanofiber nonwoven product according to claim 1, wherein the nanofiber nonwoven product has a 5 $gm/m^2$ (GSM) Normalized Air Permeability Value of less than 182.88 m/h (10 $CFM/ft^2$), when measured on an Air Permeability Tester with the flow rate of air at 23 ± 1 °C under a pressure head of 12.7 mm (0.50 inch) water pressure.

5. The nanofiber nonwoven product of claim 1, wherein the polyamide has a Relative Viscosity of from 40-52.5.

6. The nanofiber nonwoven product of claim 1, wherein the polyamide solution is a 24 wt % solution of Nylon 6,6 in formic acid which is centrifugally spun into nanofibers at a spinneret rotational speed of at least 7500 rpm using a

feed rate of 12 ml/min and a head of 6.5 cm.

**7.** The nanofiber nonwoven product of claim 1, wherein the nanofibers have an average diameter of from 250-325 nanometers.

**8.** The nanofiber nonwoven product of claim 1, wherein the nonwoven product has a basis weight of 30 gm/$m^2$ (GSM) or less.

**9.** The nanofiber nonwoven product of claim 1 incorporated into apparel.

**10.** The nanofiber nonwoven product of claim 1 incorporated into footwear.

**11.** The nanofiber nonwoven product of claim 1 used for barrier applications and incorporated into breathable fabrics, surgical nonwovens, baby care, adult care products, apparel, construction products, products for sound dampening in automotive, electronic and aircraft applications, food packaging products, wound dressings or medical implants.

**12.** A method of making a nanofiber nonwoven product comprising:

(a) providing a spinnable polyamide polymer composition comprising a solution of a polyamide in a suitable solvent, wherein the polyamide has a Relative Viscosity of from 30-300, determined in accordance with method ASTM D789 using a solution of 8.4 % by weight of the polyamide in a solvent comprising 10 % by weight of water and 90 % by weight of formic acid;
(b) centrifugally solution-spinning at a spinneret rotational speed of at least 5000 rpm the polyamide polymer composition into a plurality of nanofibers having an average fiber diameter of less than 1 micron (1000 nm;
(c) forming the nanofibers into a nonwoven product which thereby has an average nanofiber dimension of less than 1000 nanometers, and
(d) the nonwoven product has a basis weight greater than 1 gm/$m^2$.

**13.** The method of making a nanofiber nonwoven product according to claim 12, wherein the solvent comprises a solvent selected from formic acid, sulfuric acid, trifluoroacetic acid, hexafluoroisopropanol (HFIP) and phenols including m-cresol.

**14.** The method of making a nanofiber nonwoven product according to claim 12, wherein the polyamide has a Relative Viscosity of from 40-52.5.

**15.** The method of making a nanofiber nonwoven product according to claim 12, wherein the nanofibers have a diameter of from 100-500 nanometers.

**16.** The method of making a nanofiber nonwoven product according to claim 12, wherein the nonwoven product has a basis weight of 30 gm/$m^2$ (GSM) or less.

**Patentansprüche**

**1.** Ein Nanofaservliesstoffprodukt enthaltend ein Polyamid mit einer relativen Viskosität von 30-300, bestimmt gemäß der Methode ASTM D789 unter Verwendung einer Lösung von 8,4 Gew.-% des Polyamids in einem Lösungsmittel, das 10 Gew.-% Wasser und 90 Gew.-% Ameisensäure enthält, wobei das Polyamid bei einer Spinndüsendrehzahl von mindestens 5000 U/min zu Nanofasern zentrifugal lösungs-versponnen wird und in ein Vliesstoffprodukt mit einem mittleren Nanofaserdurchmesser von weniger als 1000 Nanometern und mit einem Flächengewicht von mehr als 1 g/$m^2$ umgewandelt wird.

**2.** Das Nanofaservliesstoffprodukt nach Anspruch 1, **dadurch gekennzeichnet, dass** das Polyamid Nylon 6,6 ist.

**3.** Das Nanofaservliesstoffprodukt nach Anspruch 1, **dadurch gekennzeichnet, dass** das Polyamid ein Copolymer, eine Mischung oder eine Legierung aus Nylon 6,6 und Nylon 6 ist.

**4.** Das Nanofaservliesstoffprodukt nach Anspruch 1, **dadurch gekennzeichnet, dass** das Nanofaservliesstoffprodukt bei 5 g/$m^2$ (GSM) einen normalisierten Luftdurchlässigkeitswert von weniger als 182,88 m/h (10 CFM/$ft^2$) aufweist,

gemessen mit einem Luftdurchlässigkeitstester mit der Durchflussgeschwindigkeit von Luft bei 23 ± 1 °C unter einer Druckhöhe von 12,7 mm (0,50 Zoll) Wasserdruck.

**5.** Das Nanofaservliesstoffprodukt nach Anspruch 1, **dadurch gekennzeichnet, dass** das Polyamid eine relative Viskosität von 40-52,5 aufweist.

**6.** Das Nanofaservliesstoffprodukt nach Anspruch 1, **dadurch gekennzeichnet, dass** die Polyamidlösung eine 24 Gew.-%ige Lösung von Nylon 6,6 in Ameisensäure ist, die bei einer Spinndüsendrehzahl von mindestens 7500 U/min unter Verwendung einer Förderrate von 12 ml/min und einem Kopf von 6,5 cm zentrifugal versponnen wird.

**7.** Das Nanofaservliesstoffprodukt nach Anspruch 1, **dadurch gekennzeichnet, dass** die Nanofasern einen mittleren Durchmesser von 250-325 Nanometern haben.

**8.** Das Nanofaservliesstoffprodukt nach Anspruch 1, **dadurch gekennzeichnet, dass** das Vliesstoffprodukt ein Flächengewicht von 30 g/$m^2$ (GSM) oder weniger hat.

**9.** Das Nanofaservliesstoffprodukt nach Anspruch 1, welches in Kleidung eingearbeitet ist.

**10.** Das Nanofaservliesstoffprodukt nach Anspruch 1, welches in Schuhwerk eingearbeitet ist.

**11.** Das Nanofaservliesstoffprodukt nach Anspruch 1, welches für Barriereanwendungen verwendet wird und in atmungsaktive Stoffe, chirurgische Vliese, Babypflege- und Erwachsenenpflegeprodukte, Kleidung, Bauprodukte, Produkte zur Schalldämpfung in Automobil-, Elektronik- und Flugzeuganwendungen, Lebensmittelverpackungsprodukte, Wundverbände oder medizinische Implantate eingearbeitet ist.

**12.** Ein Verfahren zur Herstellung eines Nanofaservliesstoffprodukts umfassend:

(a) Bereitstellen einer verspinnbaren Polyamidpolymerzusammensetzung, die eine Lösung eines Polyamids in einem geeigneten Lösungsmittel enthält, wobei das Polyamid eine relative Viskosität von 30-300 aufweist, bestimmt gemäß dem Verfahren ASTM D789 unter Verwendung einer Lösung von 8,4 Gew.-% des Polyamids in einem Lösungsmittel, das 10 Gew.-% Wasser und 90 Gew.-% Ameisensäure enthält;
(b) zentrifugales Lösungsspinnen der Polyamidpolymerzusammensetzung bei einer Spinndüsendrehzahl von mindestens 5000 U/min zu einer Vielzahl von Nanofasern mit einem mittleren Faserdurchmesser von weniger als 1 Mikrometer (1000 Nanometer);
(c) Ausbilden der Nanofasern zu einem Vliesstoffprodukt, das dadurch einen mittleren Nanofaserdurchmesser von weniger als 1000 Nanometern aufweist, und
(d) das Vliesstoffprodukt hat ein Flächengewicht von mehr als 1 g/$m^2$.

**13.** Das Verfahren zur Herstellung eines Nanofaservliesstoffprodukts nach Anspruch 12, **dadurch gekennzeichnet, dass** das Lösungsmittel ein Lösungsmittel umfasst, das ausgewählt ist aus Ameisensäure, Schwefelsäure, Trifluoressigsäure, Hexafluor-isopropanol (HFIP) und Phenolen, einschließlich m-Kresol.

**14.** Das Verfahren zur Herstellung eines Nanofaservliesstoffprodukts nach Anspruch 12, **dadurch gekennzeichnet, dass** das Polyamid eine relative Viskosität von 40-52,5 aufweist.

**15.** Das Verfahren zur Herstellung eines Nanofaservliesstoffprodukts nach Anspruch 12, **dadurch gekennzeichnet, dass** die Nanofasern einen Durchmesser von 100-500 Nanometern haben.

**16.** Das Verfahren zur Herstellung eines Nanofaservliesstoffprodukts nach Anspruch 12, **dadurch gekennzeichnet, dass** das Vliesstoffprodukt ein Flächengewicht von 30 g/$m^2$ (GSM) oder weniger aufweist.

## Revendications

**1.** Produit non tissé en nanofibres comprenant un polyamide qui présente une viscosité relative qui est comprise entre 30 et 300, bornes comprises, telle que déterminée conformément au procédé ASTM D789, en utilisant une solution de 8,4 % en poids du polyamide dans un solvant qui comprend 10 % en poids d'eau et 90 % en poids d'acide formique, lequel polyamide est filé en solution par centrifugation selon des nanofibres à une vitesse de rotation de

buse à filer d'au moins 5 000 tr/m et est converti selon un produit non tissé qui présente un diamètre de nanofibre moyen inférieur à 1 000 nanomètres et un poids de base supérieur à 1 gm/$m^2$.

**2.** Produit non tissé en nanofibres selon la revendication 1, dans lequel ledit polyamide est le Nylon 6,6.

**3.** Produit non tissé en nanofibres selon la revendication 1, dans lequel ledit polyamide est un copolymère, un mélange ou un alliage de Nylon 6,6 et de Nylon 6.

**4.** Produit non tissé en nanofibres selon la revendication 1, dans lequel le produit non tissé en nanofibres présente une valeur de perméabilité à l'air normalisée par rapport à un poids de base de 5 gm/$m^2$ (GSM) qui est inférieure à 182,88 m/h (10 CFM/$ft^2$), lorsqu'elle est mesurée sur un testeur de perméabilité à l'air selon le débit d'écoulement de l'air à 23 $\pm$ 1 °C sous une tête de pression soumise à une pression d'eau de 12,7 mm (0,50 pouce).

**5.** Produit non tissé en nanofibres selon la revendication 1, dans lequel le polyamide présente une viscosité relative qui est comprise entre 40 et 52,5, bornes comprises.

**6.** Produit non tissé en nanofibres selon la revendication 1, dans lequel la solution de polyamide est une solution de 24 % en poids de Nylon 6,6 dans l'acide formique, laquelle est filée par centrifugation selon des nanofibres à une vitesse de rotation de buse à filer d'au moins 7 500 tr/m en utilisant un débit d'alimentation de 12 ml/minute et une tête de 6,5 cm.

**7.** Produit non tissé en nanofibres selon la revendication 1, dans lequel les nanofibres présentent un diamètre moyen qui est compris entre 250 et 325 nanomètres, bornes comprises.

**8.** Produit non tissé en nanofibres selon la revendication 1, dans lequel le produit non tissé présente un poids de base de 30 gm/$m^2$ (GSM) ou moins.

**9.** Produit non tissé en nanofibres selon la revendication 1 incorporé à l'intérieur d'un vêtement.

**10.** Produit non tissé en nanofibres selon la revendication 1 incorporé à l'intérieur d'un produit chaussant.

**11.** Produit non tissé en nanofibres selon la revendication 1 utilisé pour des applications de barrière et incorporé à l'intérieur de tissus respirants, de non tissés chirurgicaux, de produits de soins pour bébés, de produits de soins pour adultes, de vêtements, de produits de construction, de produits pour amortir le son dans les automobiles, d'applications électroniques et aéronautiques, de produits d'emballage alimentaire, de pansements ou d'implants médicaux.

**12.** Procédé de fabrication d'un produit non tissé en nanofibres comprenant :

(a) la fourniture d'une composition de polymère de polyamide pouvant être filée qui comprend une solution d'un polyamide dans un solvant approprié, dans lequel le polyamide présente une viscosité relative qui est comprise entre 30 et 300, bornes comprises, telle que déterminée conformément au procédé ASTM D789, en utilisant une solution de 8,4 % en poids du polyamide dans un solvant qui comprend 10 % en poids d'eau et 90 % en poids d'acide formique ;
(b) le filage en solution par centrifugation à une vitesse de rotation de buse à filer d'au moins 5 000 tr/m de la composition de polymère de polyamide selon une pluralité de nanofibres qui présentent un diamètre de fibre moyen inférieur à 1 micromètre (1 000 nm) ;
(c) la formation des nanofibres selon un produit non tissé qui présente par voie de conséquence une dimension de nanofibre moyenne inférieure à 1 000 nanomètres ; et
(d) le produit non tissé présente un poids de base supérieur à 1 gm/$m^2$.

**13.** Procédé de fabrication d'un produit non tissé en nanofibres selon la revendication 12, dans lequel le solvant comprend un solvant qui est sélectionné parmi l'acide formique, l'acide sulfurique, l'acide trifluoroacétique, l'hexafluoroisopropanol (HFIP) et les phénols incluant le m-crésol.

**14.** Procédé de fabrication d'un produit non tissé en nanofibres selon la revendication 12, dans lequel le polyamide présente une viscosité relative qui est comprise entre 40 et 52,5, bornes comprises.

**15.** Procédé de fabrication d'un produit non tissé en nanofibres selon la revendication 12, dans lequel les nanofibres présentent un diamètre qui est compris entre 100 et 500 nanomètres, bornes comprises.

**16.** Procédé de fabrication d'un produit non tissé en nanofibres selon la revendication 12, dans lequel le produit non tissé présente un poids de base de 30 gm/$m^2$ (GSM) ou moins.

FIG. 1B

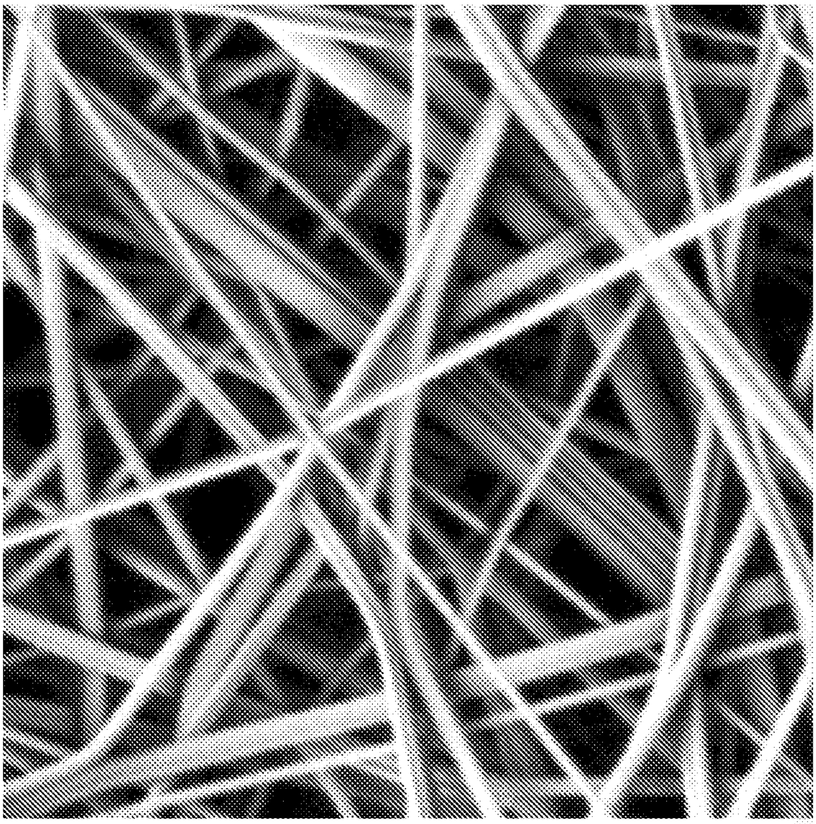

FIG. 1A

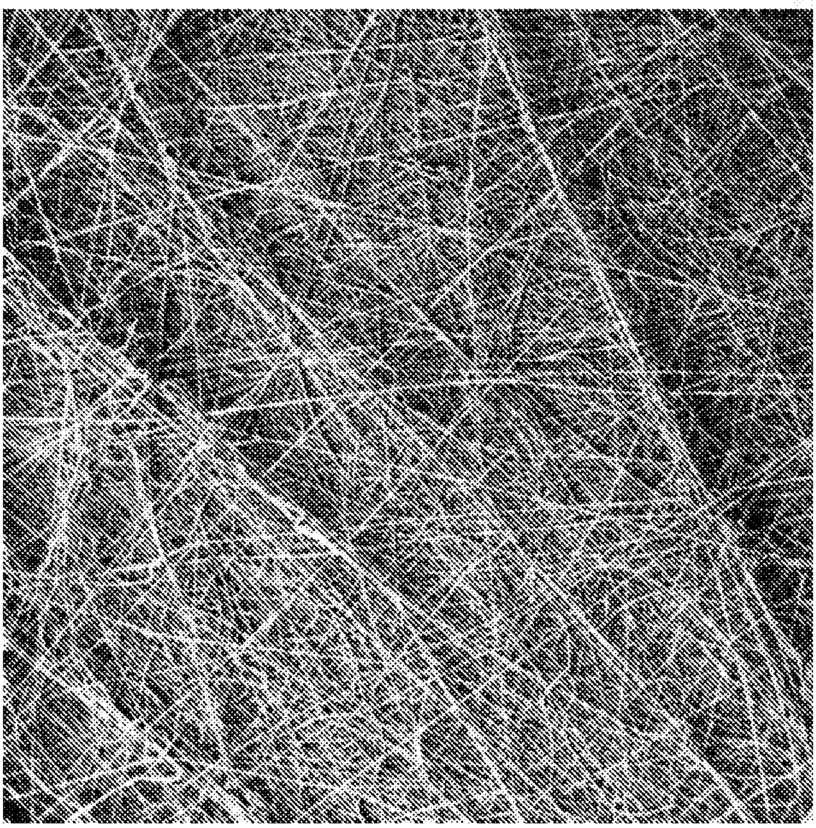

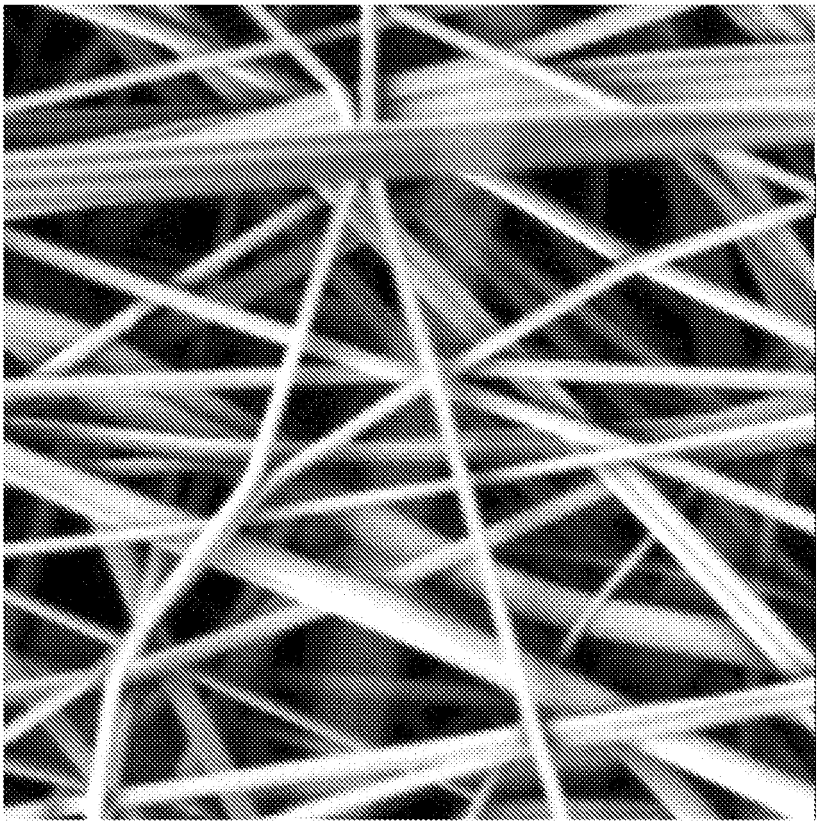

FIG. 2B

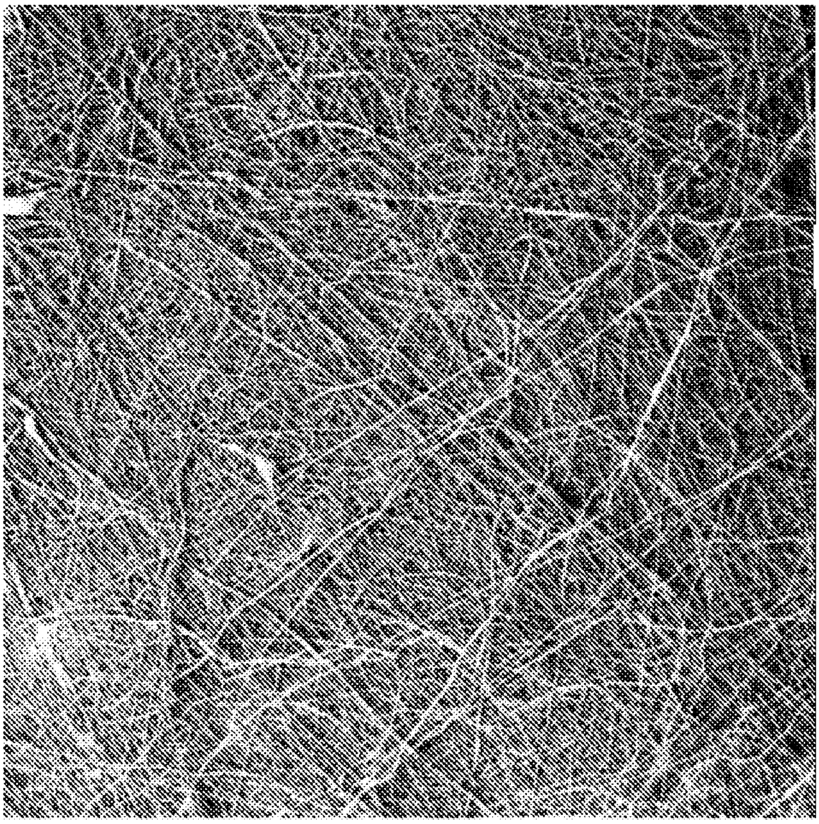

FIG. 2A

FIG. 3

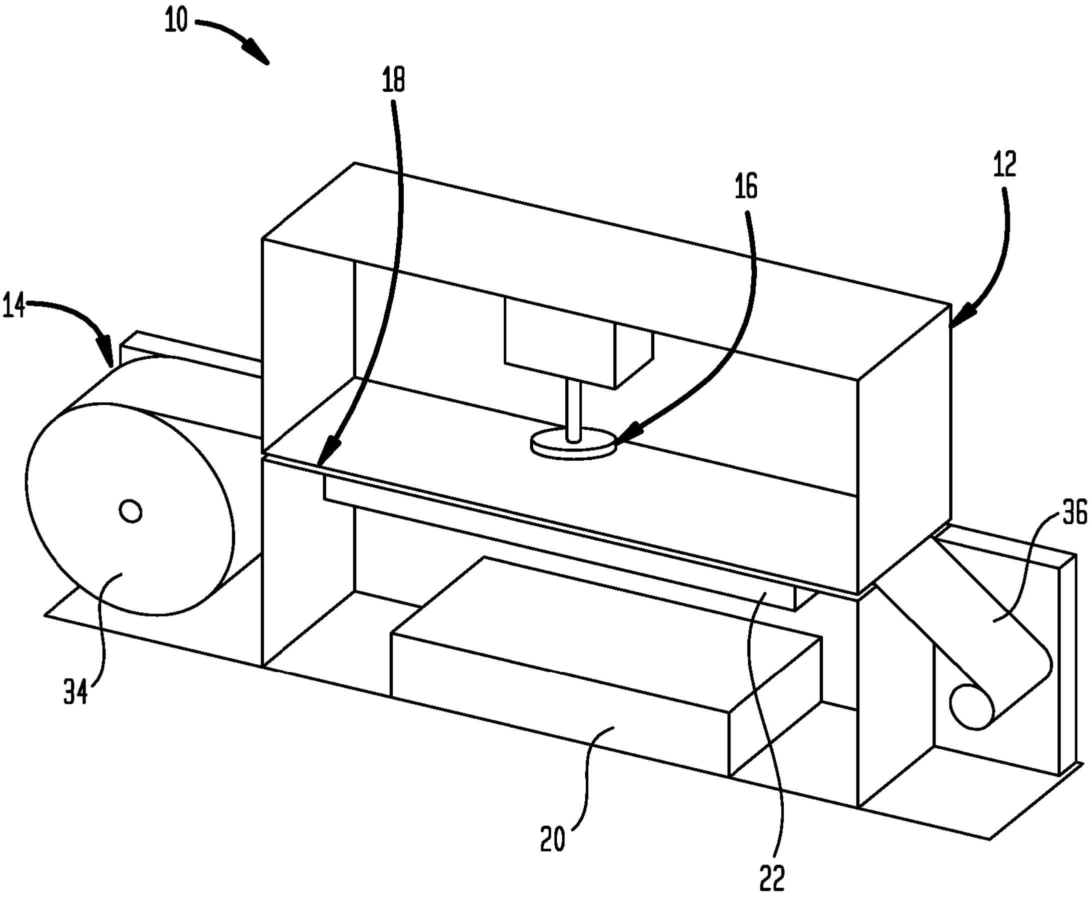

FIG. 4

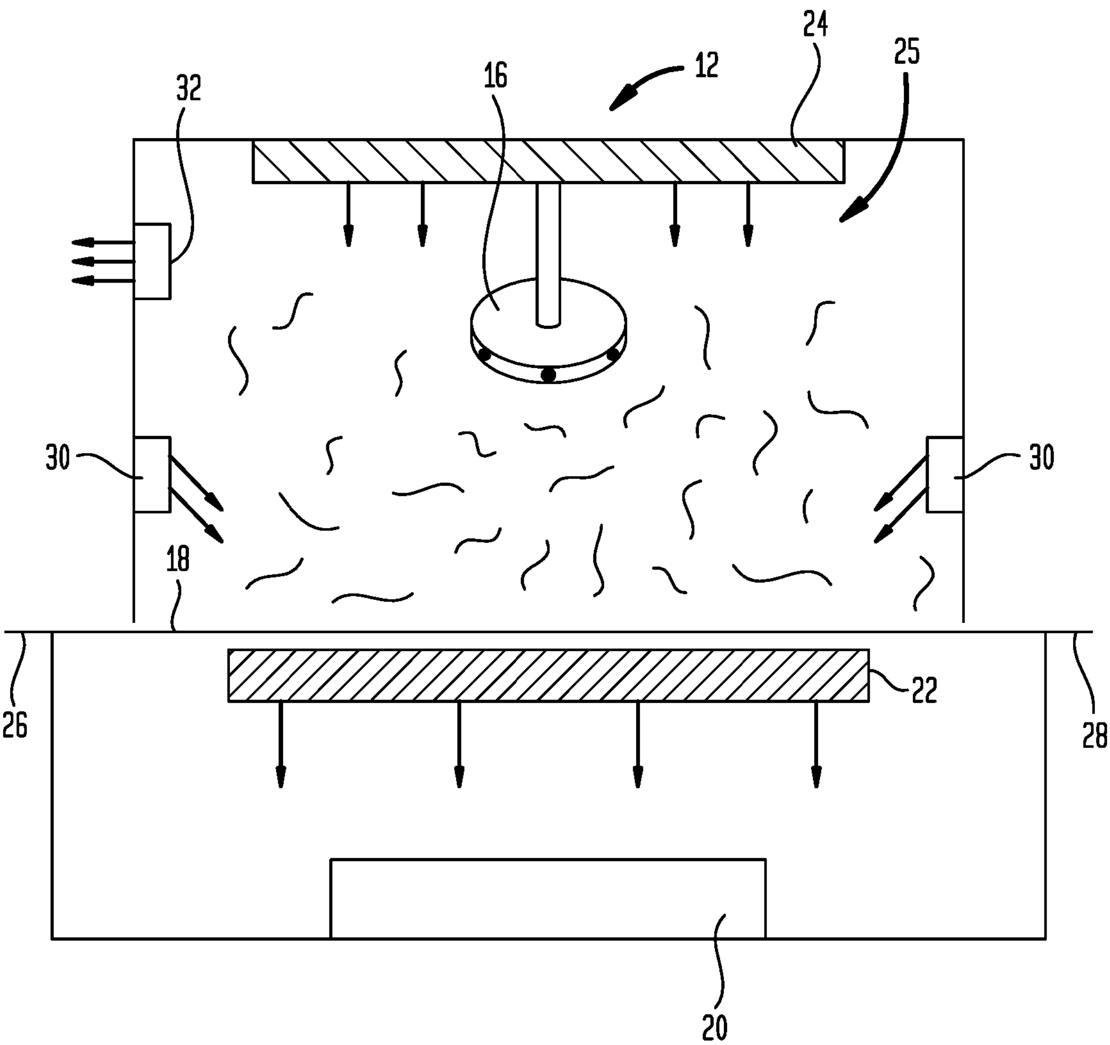

FIG. 5

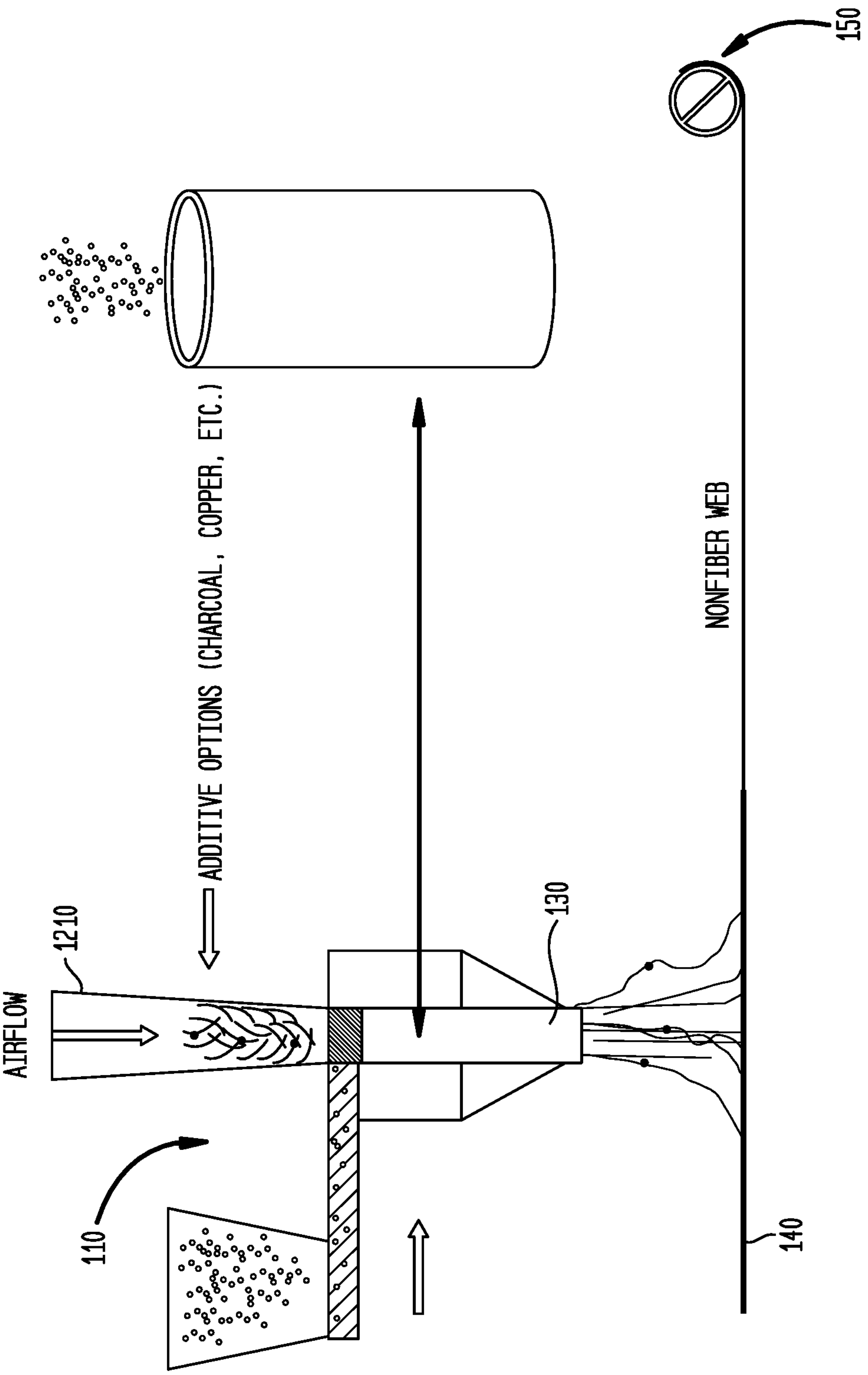
150
ADDITIVE OPTIONS (CHARCOAL, COPPER, ETC.)
NONFIBER WEB
1210
AIRFLOW
130
110
140

FIG. 6A

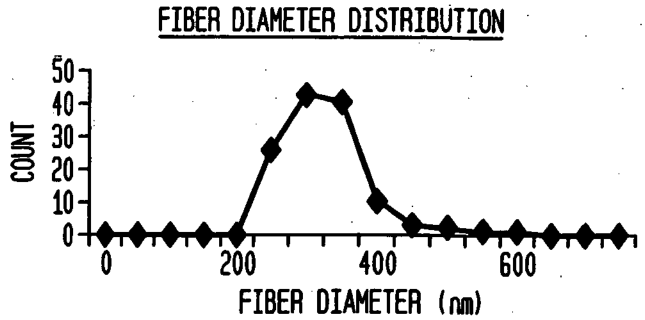


FIG. 6B

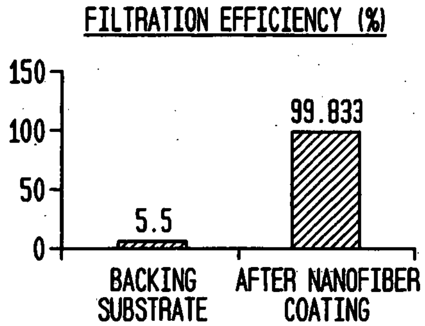


FIG. 6C

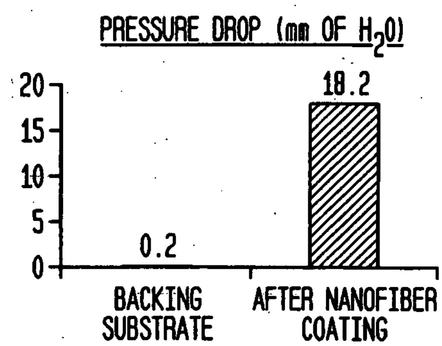


@300 nm PAO PARTICLES. TEST FLOW RATE= 32 l/min.

FIG. 6D

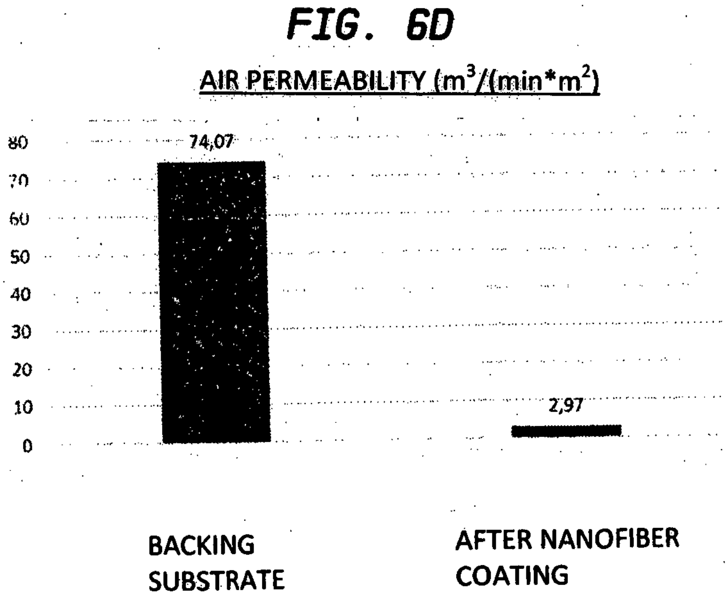


@0.5" $H_2O$ WITH NANOFIBER COATING

FIG. 7A

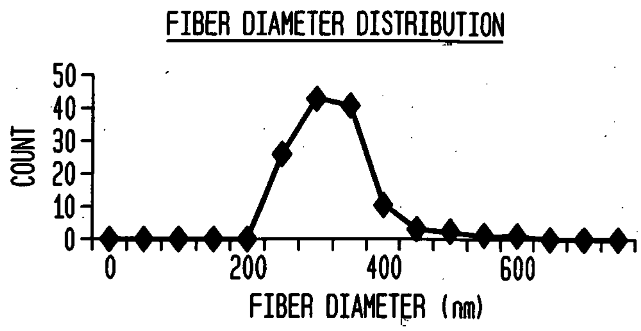


FIG. 7B

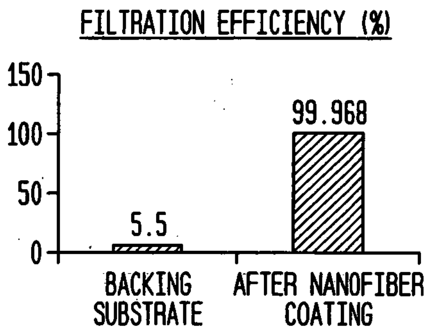


FIG. 7C

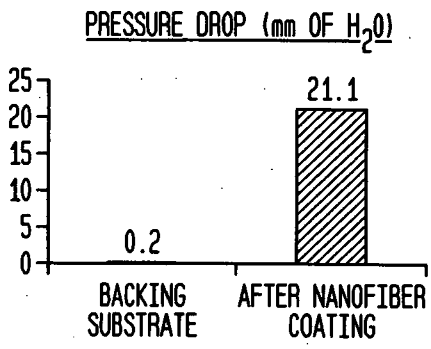


@300 nm PAO PARTICLES. TEST FLOW RATE= 32 l/min.

FIG. 7D

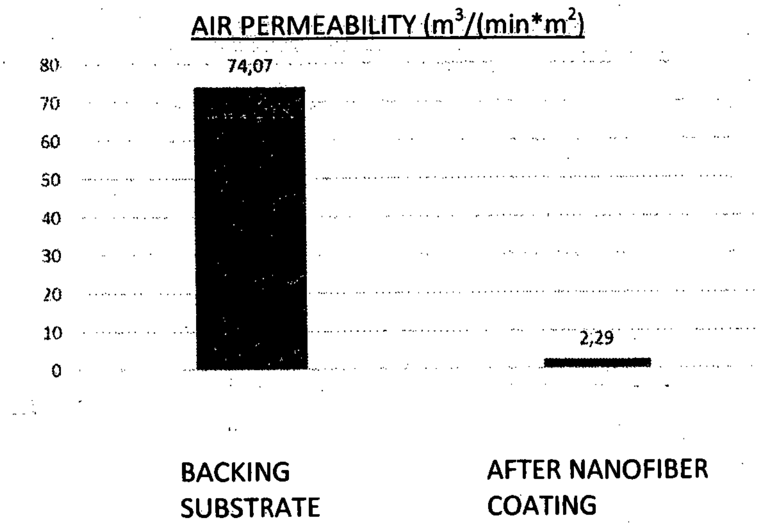


@0.5" $H_2O$ WITH NANOFIBER COATING

FIG. 8A

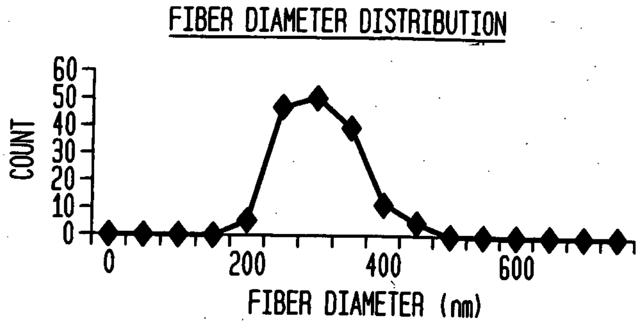


FIG. 8B

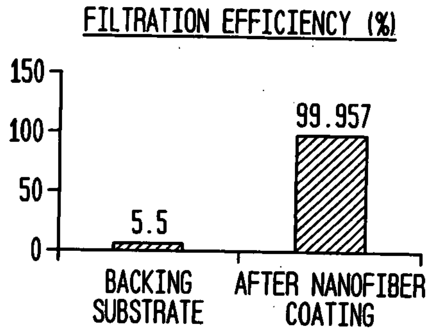


FIG. 8C

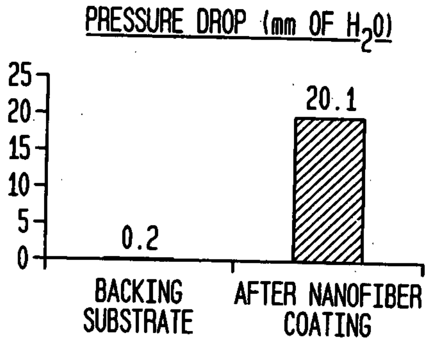


@300 nm PAO PARTICLES. TEST FLOW RATE= 32 l/min.

FIG. 8D

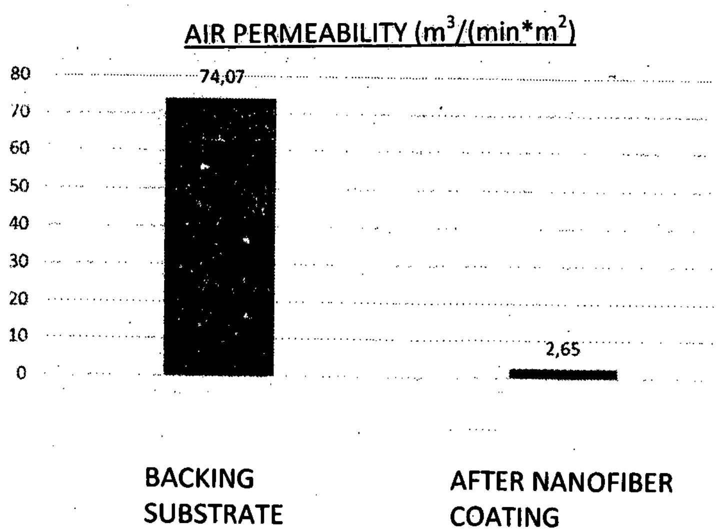


@0.5" $H_2O$ WITH NANOFIBER COATING

FIG. 9A

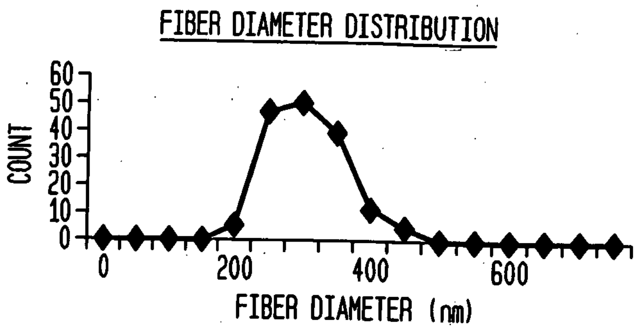


FIG. 9B

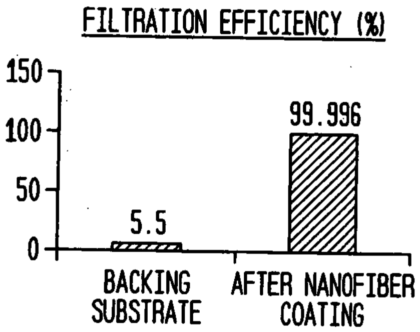


FIG. 9C

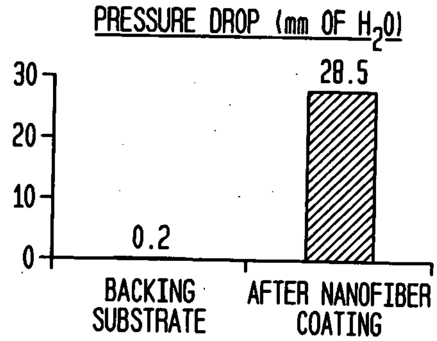


@300 nm PAO PARTICLES. TEST FLOW RATE= 32 l/min.

FIG. 9D

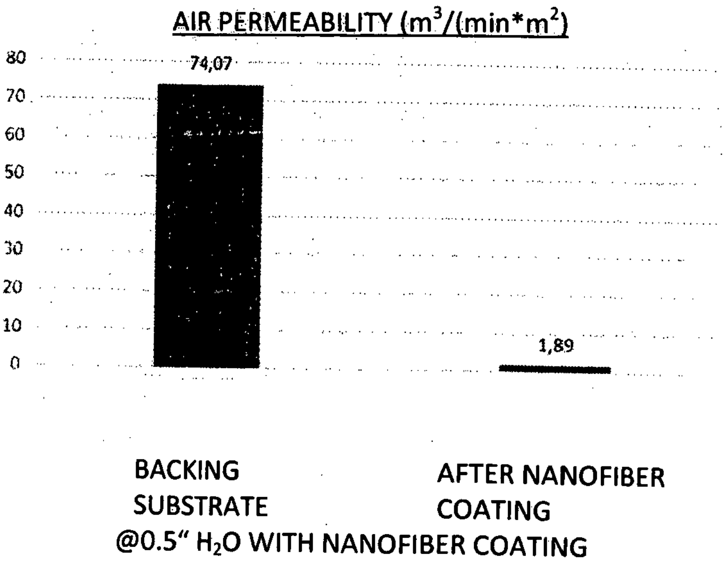


@0.5" $H_2O$ WITH NANOFIBER COATING

FIG. 10A

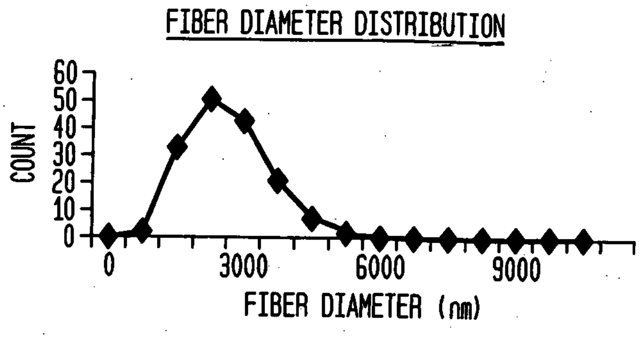


FIG. 10B

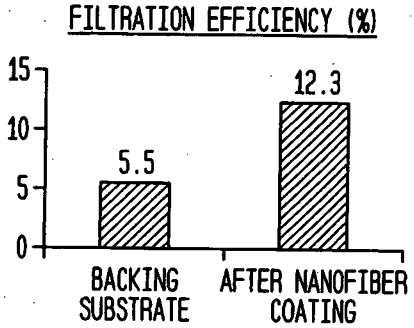


FIG. 10C

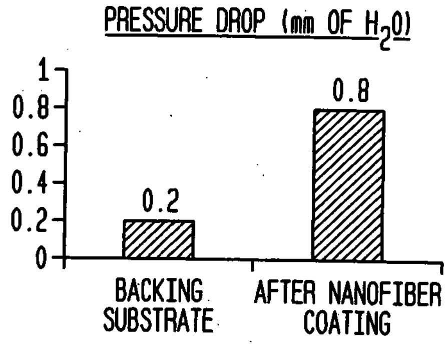


@300 nm PAO PARTICLES. TEST FLOW RATE= 32 l/min.

FIG. 10D

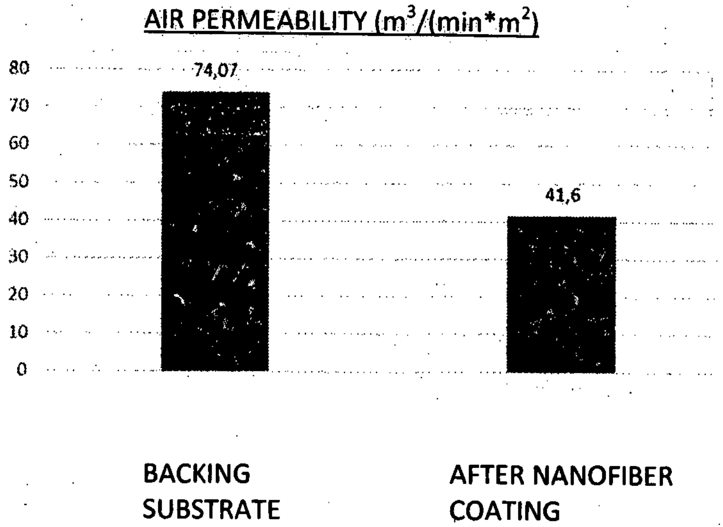


@0.5" $H_2O$ WITH NANOFIBER COATING

FIG. 11A

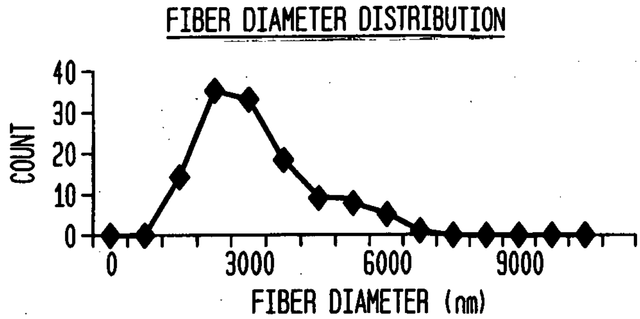


FIG. 11B

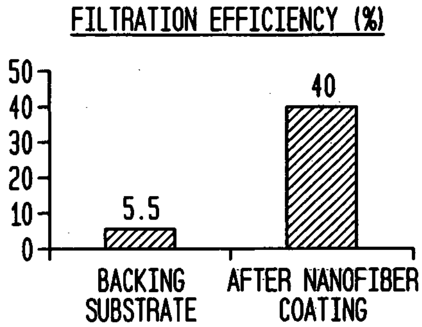


FIG. 11C

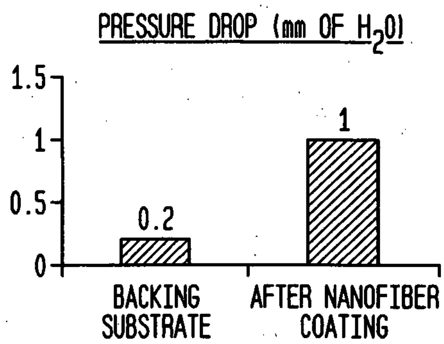


@300 nm PAO PARTICLES. TEST FLOW RATE= 32 l/min.

FIG. 11D

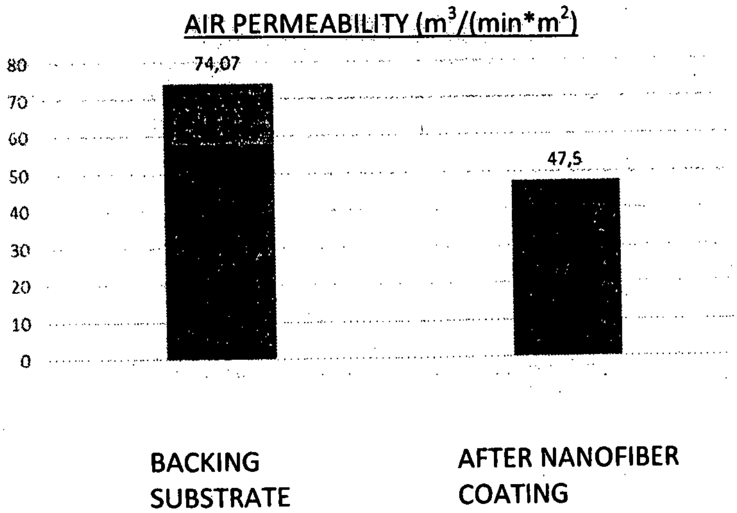


@0.5" $H_2O$ WITH NANOFIBER COATING

FIG. 12A

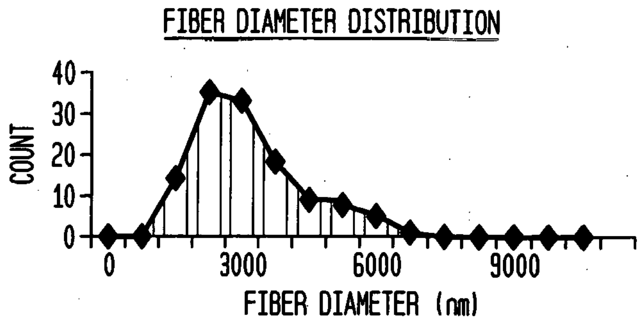


FIG. 12B

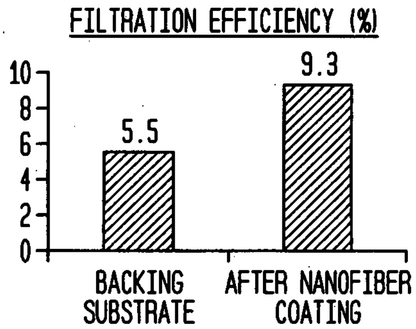


FIG. 12C

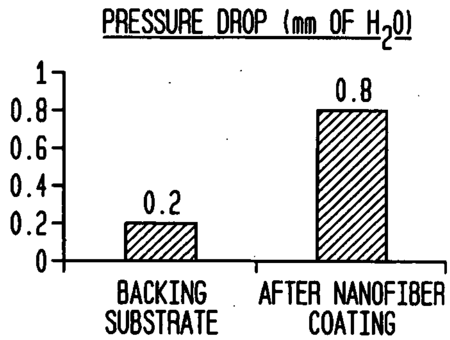


@300 nm PAO PARTICLES. TEST FLOW RATE= 32 l/min.

FIG. 12D

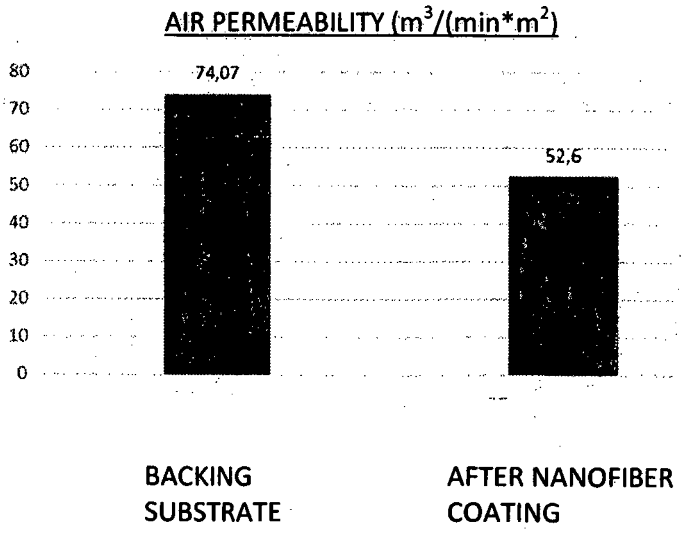


@0.5" $H_2O$ WITH NANOFIBER COATING

FIG. 13A

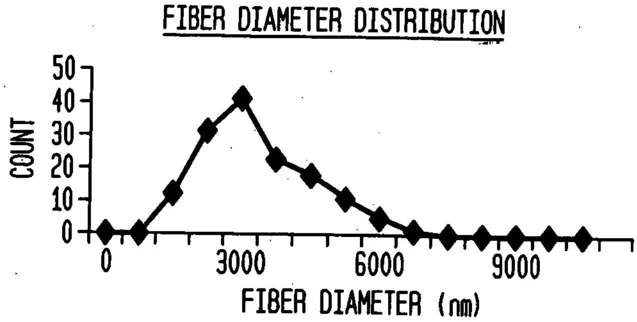


FIG. 13B

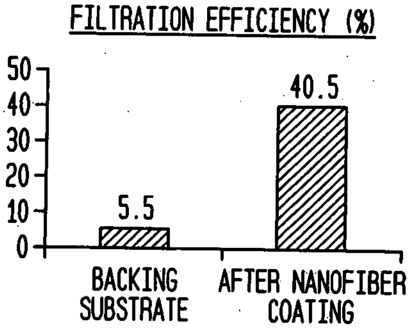


FIG. 13C

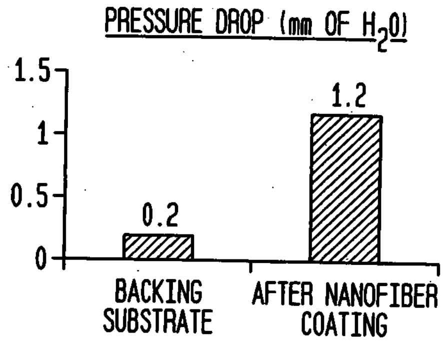


@300 nm PAO PARTICLES. TEST FLOW RATE= 32 l/min.

FIG. 13D

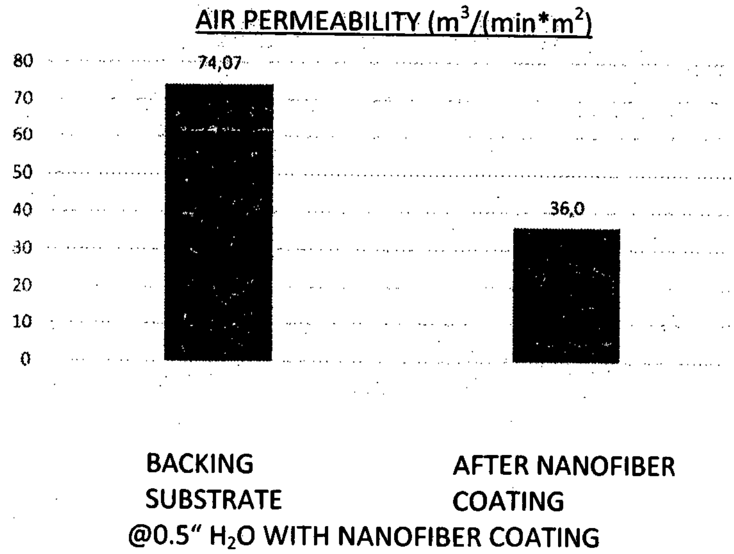


@0.5" $H_2O$ WITH NANOFIBER COATING

FIG. 14A

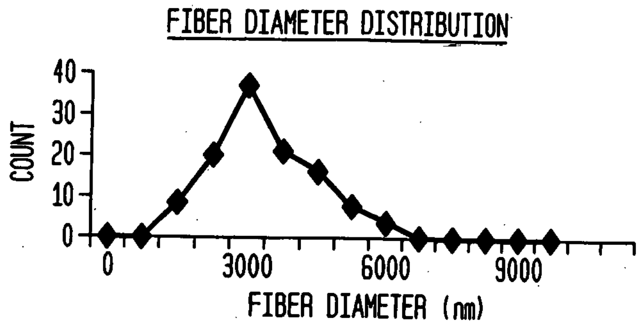


FIG. 14B

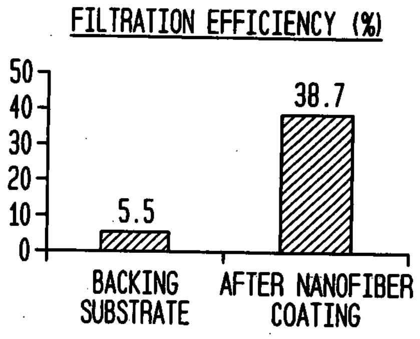


FIG. 14C

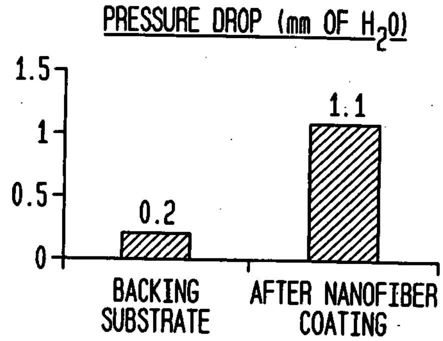


@300 nm PAO PARTICLES. TEST FLOW RATE= 32 l/min.

FIG. 14D

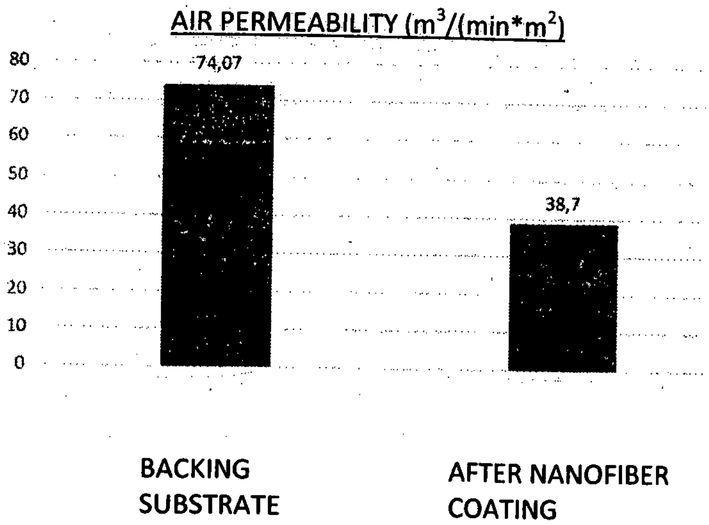


@0.5" $H_2O$ WITH NANOFIBER COATING

FIG. 15A

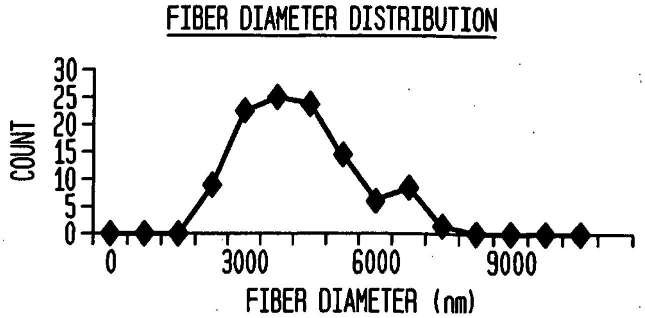


FIG. 15B

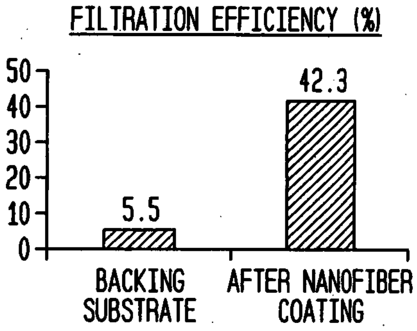


FIG. 15C

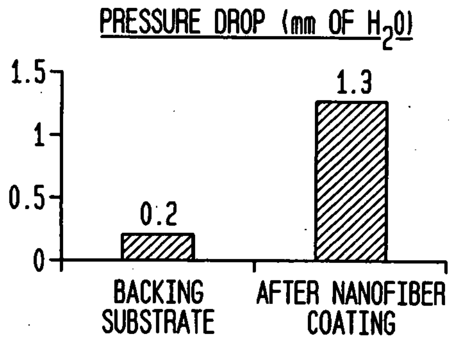


@300 nm PAO PARTICLES. TEST FLOW RATE= 32 l/min.

FIG. 15D

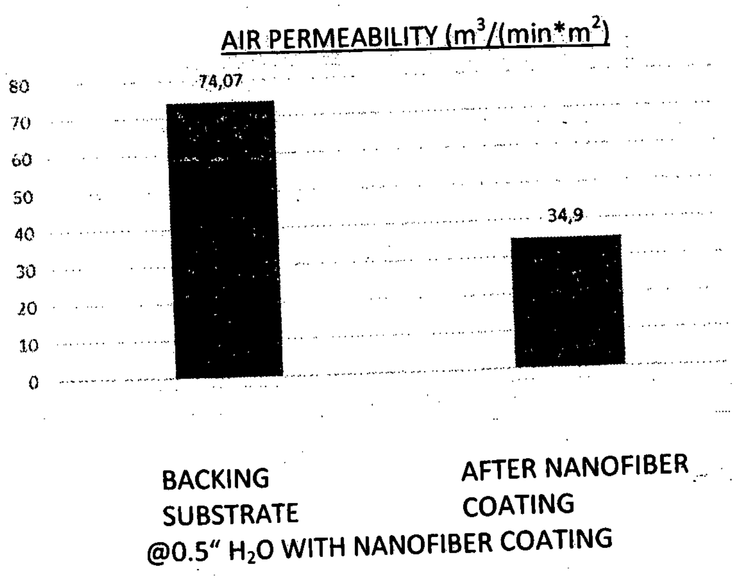


@0.5" $H_2O$ WITH NANOFIBER COATING

FIG. 16A

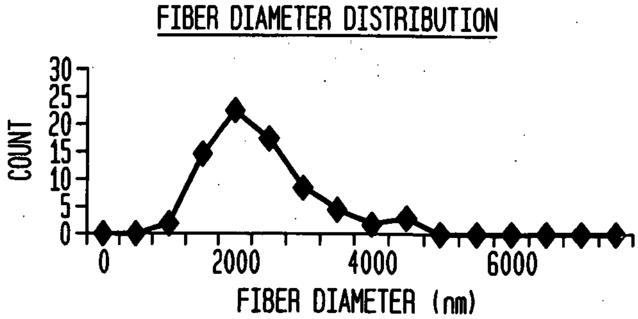


FIG. 16B

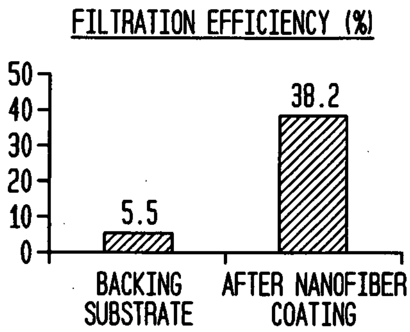


FIG. 16C

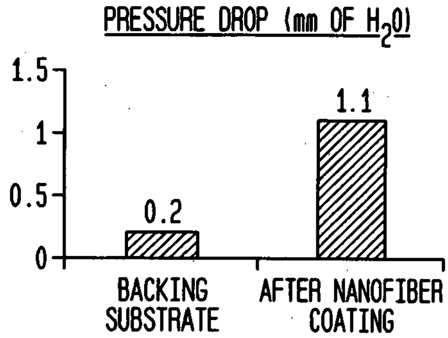


@300 nm PAO PARTICLES. TEST FLOW RATE= 32 l/min.

FIG. 16D

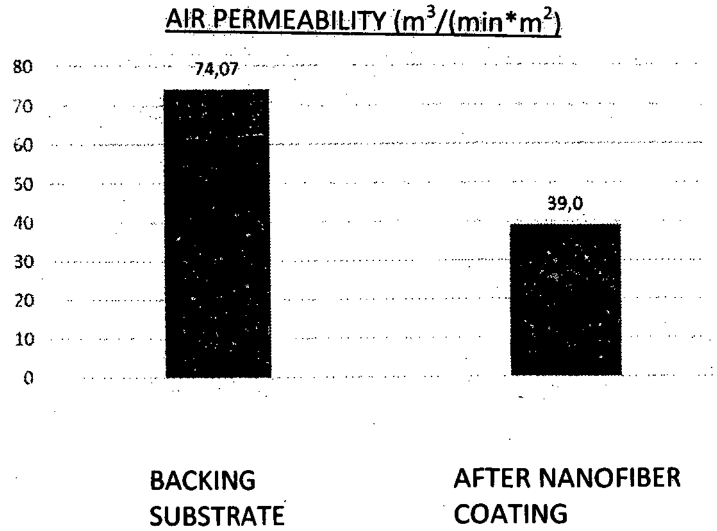


@0.5" $H_2O$ WITH NANOFIBER COATING

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20140097558 A1, Lustenberger
- US 20150145175 A1
- WO 2014074818 A2
- WO 2015003170 A2
- WO 2015153477 A1
- US 7008465 B
- WO 2008036332 A2
- US 2009026137 A1
- US 20150107457 A
- US 20150111019 A
- US 4760129 A
- US 5504185 A
- US 5543495 A
- US 5698658 A
- US 6011134 A
- US 6136947 A
- US 6169162 B
- US 7138482 B
- US 7381788 B
- US 8759475 B
- WO 2015153477 A
- US 8777599 B, Peno
- US 8658067 B, Peno
- WO 2012109251 A
- US 8747723 B, Marshall
- US 8277711 B, Huang
- US 8668854 B
- US 8808594 B, Marshall


### Non-patent literature cited in the description


- **HASSAN et al.** *J Membrane Sci.,* 2013, vol. 427, 336-344
- Kirk-Othmer, Encyclopedia of Chemical Technology. Wiley, 1982, vol. 18, 328-371
- **GLASSCOCK et al.** *High Performance Polyamides Fulfill Demanding Requirements for Automotive Thermal Management Components,* 10 June 2016, http://www2.dupont.com/Automotive/en_US/assets/downloads/knowledge%20c enter/HTN-white-paper-R8.pdf